# EUROPEAN PATENT SPECIFICATION

(11) **EP 2 174 052 B1**
(45) Date of publication and mention of the grant of the patent: **16.11.2011**
(21) Application number: 08788667.7
(22) Date of filing: 11.08.2008
(51) Int. Cl.: F16L 1/20, F16L 1/23

(54) **PIPELINE LAYING APPARATUS AND METHOD**
ROHRVERLEGUNGSVORRICHTUNG UND -VERFAHREN
APPAREIL ET PROCEDE DE POSE DE PIPELINE

(30) Priority: 10.08.2007 GB 0715545
(43) Date of publication of application: 14.04.2010
(73) Proprietor: Subsea 7 Contracting (UK) Limited, Westhill Aberdeen Aberdeenshire AB32 6JZ (GB)
(72) Inventor: POSE, Jean-Baptiste, Aberdeen, Aberdeenshire AB12 3RY (GB)
(74) Representative: Cummings, Sean Patrick
(86) International application number: PCT/GB2008/050696
(87) International publication number: WO 2009/022177

(56) References cited:
- WO-A-02/057675
- WO-A-2006/085739
- GB-A- 2 428 080

## Description

### FIELD & BACKGROUND DISCUSSION

The present invention relates to apparatus for lowering elongate articles such as pipelines from a vessel, and methods of laying elongate articles from a vessel.

In a pipeline laying operation, once the required length of pipeline has been deployed from the vessel, it is necessary to abandon that length of pipeline, in a controlled fashion, from the vessel to the sea bed. This is normally performed using an abandonment cable on a suitable winch. Abandonment requires that the pipeline being laid is cut at the appropriate point (which depends upon the particular application of the pipeline being laid). This leaves a lower portion of pipeline (which is to be abandoned) below the cut, and an upper portion of pipeline (to be used in the next section of laid pipeline in a subsequent pipeline laying operation) above the cut. Clearly, once cut, the lower portion is suspended *directly below* the pipeline laying equipment, normally using a hang off clamp. This makes it very difficult and time consuming to connect a suitable abandonment cable to the top of the lower portion because the cable must either pass through, or somehow bypass, the pipeline laying equipment thereabove. A similar problem also occurs in J-Lay operation.

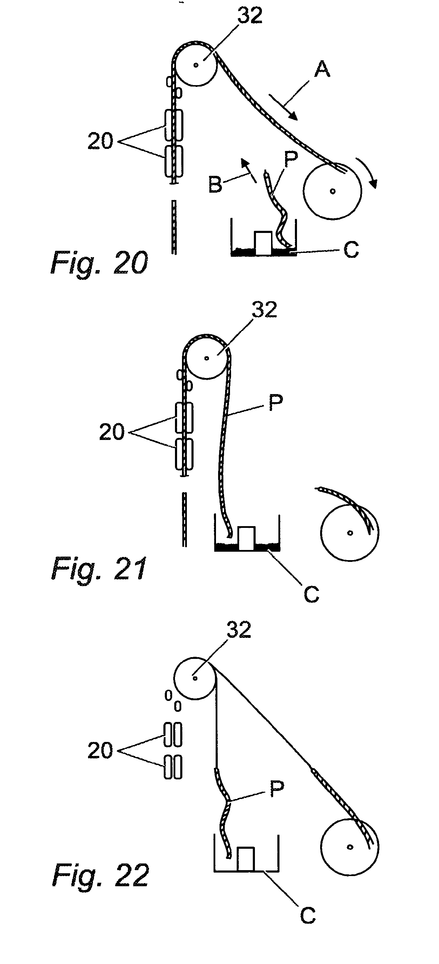

Currently one way of attempting to overcome this problem is described in United States Patent No. 5, 421, 674 to Maloberti et al. As depicted in attached Fig. 20, this method of abandonment involves feeding a pipe follower through the tensioners 20 on the tower. In order to do this, the pipeline being laid must be cut and reeled back onto the main reel in the direction indicated by arrows A in Fig. 20. Once the rigid pipeline has been reeled back, a piece of flexible pipe P is fed from a carousel C in the direction B up over the top of the aligner wheel 32, through the tensioners 20 and then connected to the suspended pipeline (Fig. 21). The flexible pipe P is then reeled out in order to abandon the pipeline to the sea bed. Once the pipeline has been abandoned, the flexible pipe P is reeled back in and the rigid pipe is fed back onto the aligner wheel 32 from the reel (Fig. 22). This process is very time-consuming (often taking in the region of 8 hours to complete). Furthermore, the order of steps used in this method results in the firing line not being able to be used until the flexible pipe P has been fully recovered.

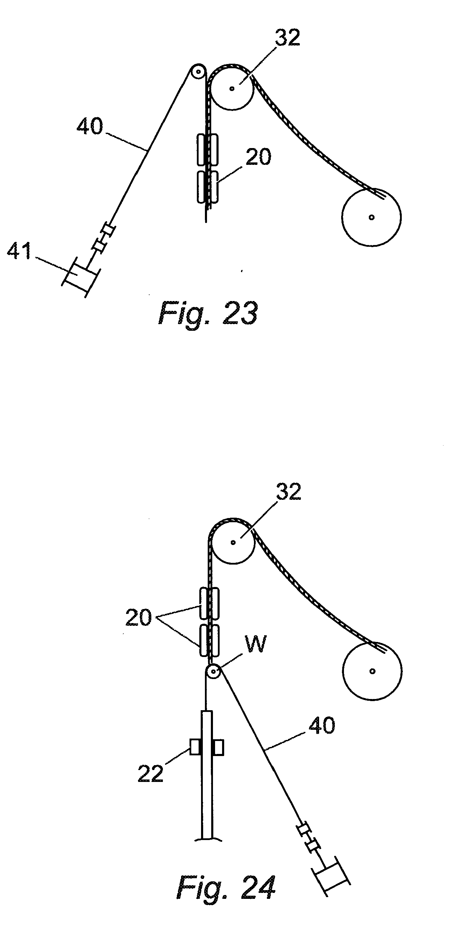

As shown in Fig. 23, an alternative to the procedure described above, is to run an abandonment and recovery (A&R) cable 40 between the pipeline being laid and the tensioners 20. This requires that the tensioners 20 are opened and the pipeline being laid is braced aside to make room for the cable 40. Again, this change in configuration is time consuming and results in the firing line not being able to be used until the abandonment and recovery cable has been fully recovered.

As shown in Fig. 24, another method of abandonment involves inserting the winch sheave W between the tensioners 20 and hang-off clamp 22. This allows the winch cable 40 to be passed directly between the tensioners 20 and hang off clamp 22 thereby completely bypassing the tensioners 20 during abandonment and recovery. As well as the disadvantages of the previously described methods, this method has the further disadvantage that only a very limited height remains between the hang of clamp 22 and the bottom of the tensioners 20. This severely limits the size of structures, such as PLET or ILT modules, which may be installed on the pipeline being laid.

United States Patent Publication No. US2003/0147699 (Long et al) describes a system where the lower section of pipeline being laid can be moved to one side on an extension of the tower, in order to allow connection to an abandonment wire. In the Long *et al* vessel, the entire pipelay tower is arranged to move from side to side for other reasons. The A&R arrangement described therein is not well suited to use in more conventional lay apparatus. WO 2004/085898 of the present applicant describes a vessel having a more conventional lay tower, in which the hang-off clamp is mounted on a trolley and movable transverse beam to allow bulky articles to be attached to the cut end of the suspended pipeline. These articles are to be suspended from a separate crane, however.

One problem with this type of arrangement is that the weight of the suspended pipeline being laid, as well as the weight of a termination module, is suspended from a point off the centre line of the vessel. This can cause instability of the vessel in the sea. Furthermore, such asymmetrical loading requires particular engineering in the pipeline laying tower. The side-by-side arrangement also requires an especially broad opening to be made in the working deck.

WO 2006/085739 discloses another type of pipeline laying apparatus.

According to the present invention, there is provided apparatus for lowering an elongate article from a vessel, the apparatus comprising;-
a tower mounted on the vessel and including tensioning apparatus for suspending an article being laid into the sea, the tower mounting defining a pivot axis permitting the tower to be inclined at an angle away from vertical to match an inclined axis of the article being laid;
a hang-off clamp
abandonment apparatus for abandoning said elongate articles to the seabed after laying;
wherein the abandonment apparatus is operable independently to suspend or lower articles along an abandonment axis which is spaced from said inclined axis while remaining in a vertical plane containing said inclined axis, and wherein the apparatus is capable of aligning the abandonment axis and the hang off clamp with one another while supporting the article.

This apparatus could be used, for example, in a reel-lay or J-lay operation.

The abandonment apparatus may be capable of operating substantially simultaneously with the tensioning apparatus in order to permit abandonment or recovery of the article substantially simultaneously with a pipe laying operation.

The hang off clamp may be selectively moveable along the centreline of the vessel between a forward position, in which it is substantially aligned with the inclined axis, and a rearward position in which it is substantially aligned with the abandonment axis. Typically, the hang off clamp is moveable on the vessel centreline along a sliding rail.

The tower of the vessel may be capable of tilting inboard in order to align the abandonment axis and the hang off clamp with one another.

The tower may also comprise pipe laying apparatus including a straightener, and an aligner wheel mounted toward the top of the pipeline laying tower.

The abandonment apparatus may comprise, winch means, winch cable and sheave, an abandonment trolley capable of restraining the winch cable along the height of the tower, and an underwater hook.

The abandonment trolley is provided with a sheave. In the case where the abandonment axis is angled away from the tower angle, this sheave assists movement of the winch cable and allows the winch cable to be diverted, above the sheave, in line with the tower axis.

The pipeline laying apparatus and the abandonment apparatus may be provided on separating apparatus which provides the spacing between the inclined laying axis and the abandonment axis.

The hang off clamp may be tiltable in order to correspond with the inclined laying axis. In addition, the hang off clamp may be further tiltable into a storage position in which its longitudinal axis is substantially aligned with the centreline of the vessel.

According to a second aspect of the present invention, there is also provided a method of lowering an elongate article from a vessel, the method comprising;-
providing a tower mounted on the vessel, the tower including tensioning apparatus for suspending an article being laid into the sea;
pivoting the tower on a pivot axis at the tower mounting in order to incline the tower at an angle which is away from vertical and which matches an inclined axis of the article being laid;
providing a hang-off clamp
providing abandonment apparatus for abandoning said elongate articles to the seabed after laying;
suspending and lowering, from the abandonment apparatus, articles along an abandonment axis which is spaced from said inclined axis while remaining in a vertical plane containing said inclined axis; and
selectively aligning the abandonment axis and the hang off clamp with one another while supporting the article.

The step of aligning the abandonment axis and the hang off clamp with one another may be performed by tilting the tower inboard until the abandonment axis is aligned with the hang off clamp.

Alternatively or additionally, the step of aligning the abandonment axis and the hang off clamp with one another may be performed by moving the hang-off clamp along the vessel centreline until it is line with the abandonment axis.

The step of aligning the abandonment axis and the hang off clamp may be performed using a combination of tilting the tower and moving the hang off clamp. This is particularly necessary when the tower is configured to lay at very shallow angles.

The method may further comprise
cutting the pipeline being laid at an appropriate length and abandoning the pipeline to the sea bed. The step of abandoning can further involve suspending the cut length of pipeline from the hang off clamp, moving the hang off clamp and suspended pipeline along the pipeline laying vessel centreline until it is substantially aligned with the abandonment axis, connecting the pipeline to the abandonment apparatus and lowering the pipeline toward the sea bed using the abandonment apparatus.

After abandonment of the pipeline being laid, the method may further comprise
retrieving the abandonment apparatus toward the vessel and, substantially simultaneously, preparing on the tower a second piece of pipeline to be laid. The step of preparing the second piece of pipeline to be laid may also include the step of lowering, toward the sea bed, a first end of the second piece of pipeline to be laid.

The method may additionally include
tilting the hang off clamp relative to the deck of the pipeline laying vessel in order to accommodate changes in the inclined axis. Additionally, the method may involve selectively tilting the hang off clamp into a storage position in which its longitudinal axis is substantially aligned with the laying vessel centreline.

### BRIEF DESCRIPTION OF THE DRAWINGS

Embodiments of the invention will now be described, by way of example only, with reference to the accompanying drawings, in which:
Fig. 1 is a schematic transverse view of the pipeline laying apparatus according to the present invention;
Fig. 2 is a further view of the apparatus of Fig. 1 illustrating the different positions of the hang off clamp;
Fig. 3 is a plan view of the rear portion (transom) of the vessel of Fig. 1;
Fig. 4 is a rear end view of a vessel provided with pipe laying apparatus according to the present invention;
Figs. 5 to 7 are schematic transverse views of the apparatus of Figs. 1 and 2 where the tower is angled inboard at 60, 45 and 30 degrees respectively relative to the deck of the vessel;
Fig. 8 is a schematic transverse view of the apparatus of Figs. 5 to 7 where the tower is angled outboard at an angle equal to or greater than 90 degrees relative to the deck of the vessel;
Fig. 9 is a plan view of the transom and hang off clamp according to the third aspect of the present invention;
Fig. 10 is a rear end view of the hang off clamp of Fig. 9;
Fig. 11 is a schematic transverse view of the transom showing the hang off clamp in various operational configurations;
Fig. 12 is a plan view of the hang off clamp at the rear of the pipe laying vessel;
Fig. 13 is a rear view of the hang off clamp of Fig. 13;
Fig. 14 is a side view of the hang off clamp of Fig. 13;
Fig. 15 is a schematic transverse view of the hang off clamp in a forwardly tilted position;
Fig. 16 is a schematic transverse view of the hang off clamp in a neutral position;
Fig. 17 is a schematic transverse view of the hang off clamp in an intermediate position as it moves from an operational position to a stowed position;
Fig. 18 is schematic transverse view of the hang off clamp in a stowed position;
Fig. 19 is a transverse view of abandonment and recovery equipment mounted on the top of the pipe laying tower;
Figs. 20 to 22 are schematic diagrams illustrating a method of abandonment, not in accordance with the present invention, where a flexible pipe follower is passed through the main tensioners;
Fig. 23 is a schematic diagram illustrating an alternative method of abandonment not in accordance with the present invention where the upper section of pipe is braced aside to allow abandonment using a winch cable passed through the tensioners;
Fig. 24 is a schematic diagram illustrating a further alternative method of abandonment, not in accordance with the present invention, where the abandonment is performed using a swivelling sheave located below the tensioners;
Fig. 25 is a schematic diagram illustrating a method according to the present invention, where the abandonment and recovery axis and pipe laying axis are offset from one another;
Figs. 26A, 27A, 28A, 29A, and 30A show the sequence of abandoning a pipeline to the sea bed provided by the method of the present invention; and
Figs. 26B, 27B, 28B, 29B, and 30B show a more detailed view of the vessel configuration at each step of the sequence depicted by Figs. 26A, 27A, 28A, 29A, and 30A.

### DETAILED DESCRIPTION OF THE EMBODIMENTS

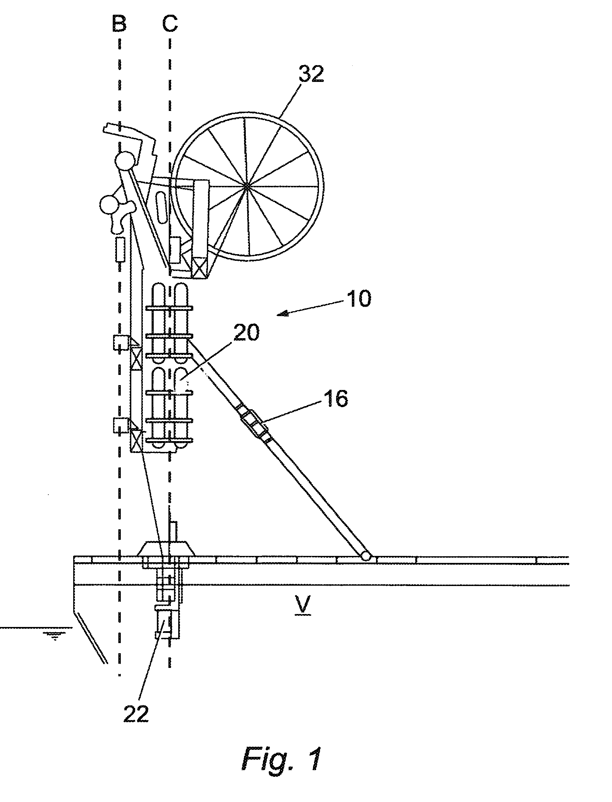

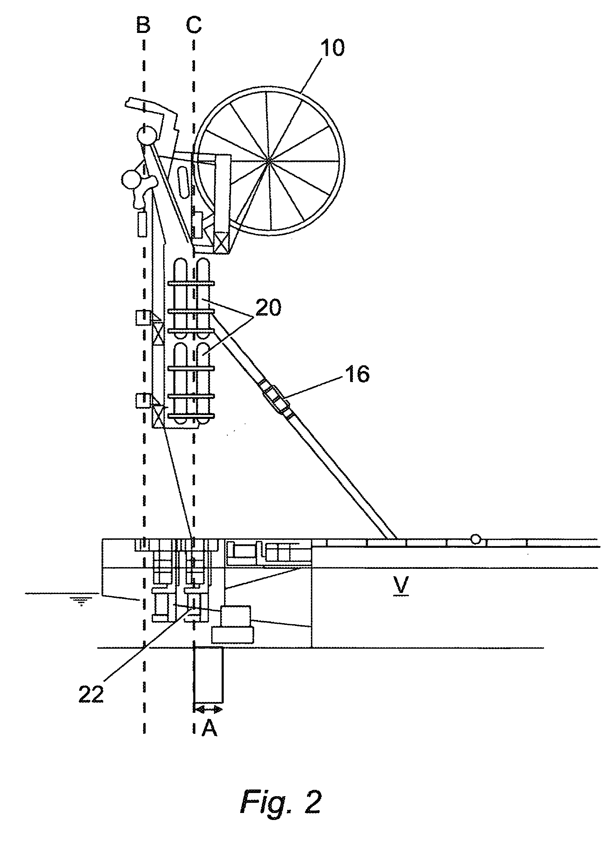

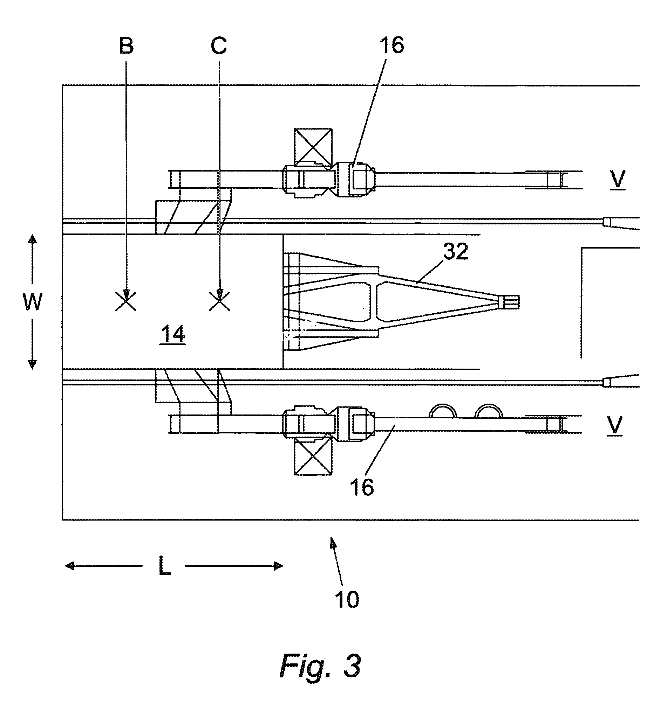

Figs. 1 to 4 show pipelaying apparatus mounted in a tower 10 provided at the rear of a pipeline laying vessel V. The vessel V is installed with pipeline laying equipment including reels (not shown), tensioners 20, hang off clamp 22 and a pair of tower adjuster legs 16. Referring to Figs. 1 and 2, in the embodiment shown, the vessel V has an opening 14 in the form of a slot in the vessel deck transom. The slot has width W, length L and height H. As will be described subsequently, the laying tower has an abandonment and recovery axis aligned with point B and a pipeline laying axis aligned with point C (Fig. 3) where points B and C are deliberately spaced apart from one another along the longitudinal axis (centreline) of the vessel V.

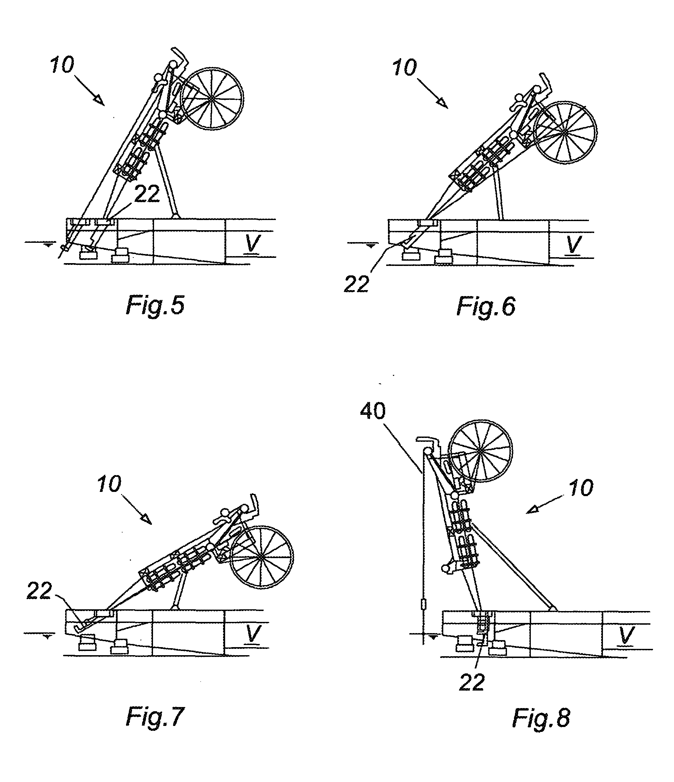

Figs. 5 to 8 show the tower in different angles of inclination, from a steep but inclined laying configuration in Fig. 5 to a very shallow or transit position in Fig. 7. In Fig. 8 the tower is shown inclined beyond vertical, in a hoisting operation by which particularly large modules can be overboarded.

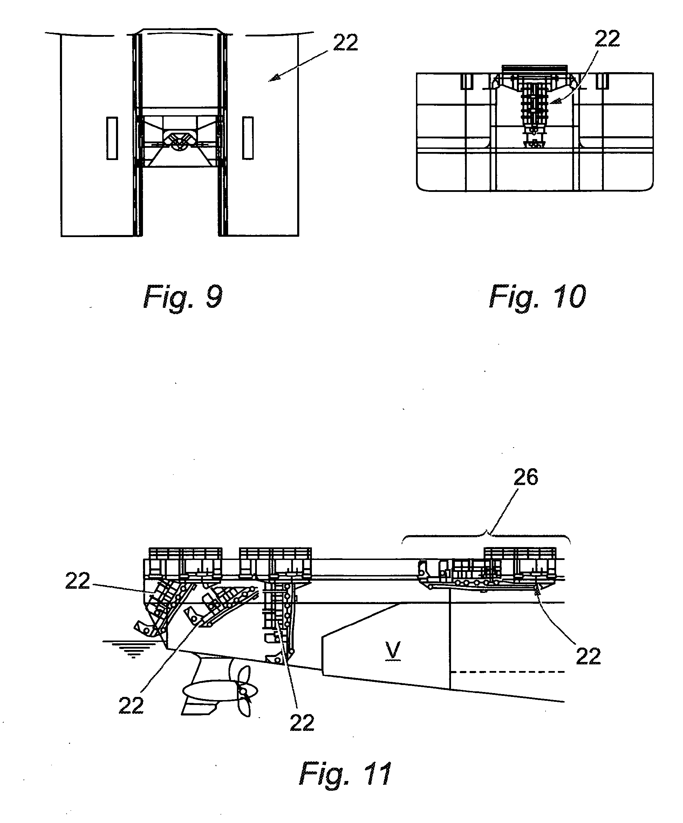

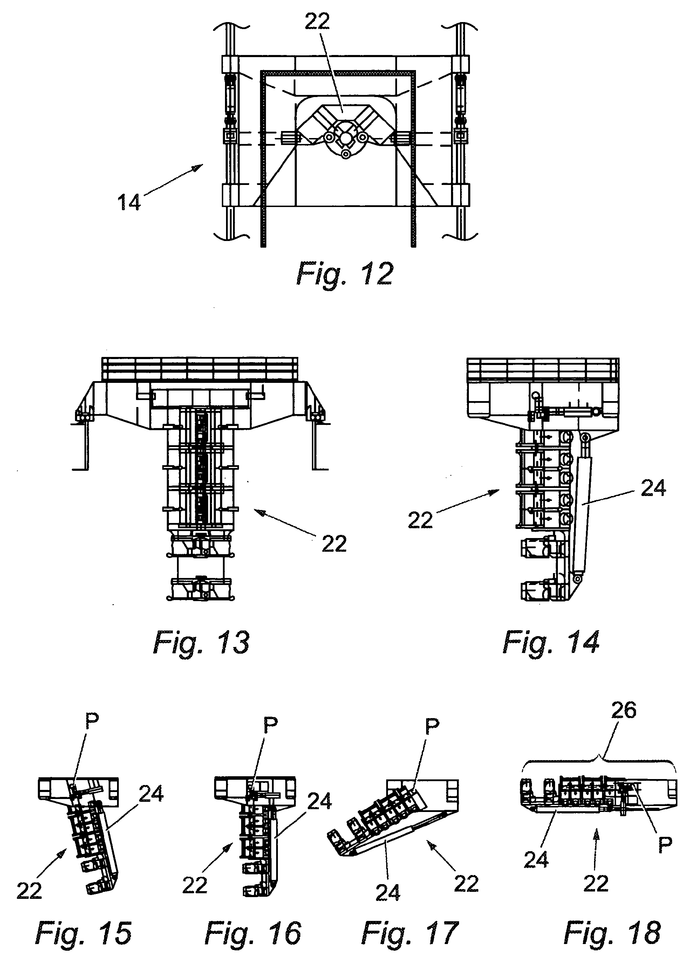

The hang off clamp 22 is shown in more detail on Figs. 9 to 18. The hang off clamp 22 is mounted in a U-shaped recess of the opening 14 and is connected to its mountings at a pivot point P which defines a pivot axis. An actuation arm 24 extends from the mounting recess to the bottom of the hang off clamp 22 and is operable by any suitable means, for example pneumatics or hydraulics. As shown in Fig. 18, a storage area 26 is provided level with the recess in order to accept the hang off clamp in a stored position where it is flush with the vessel deck surface.

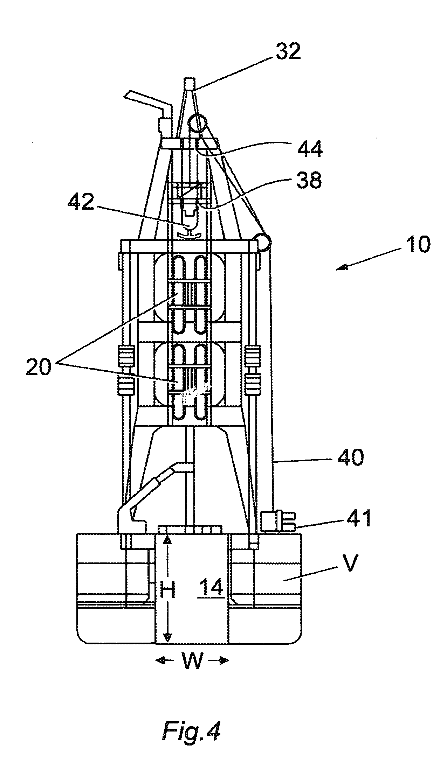

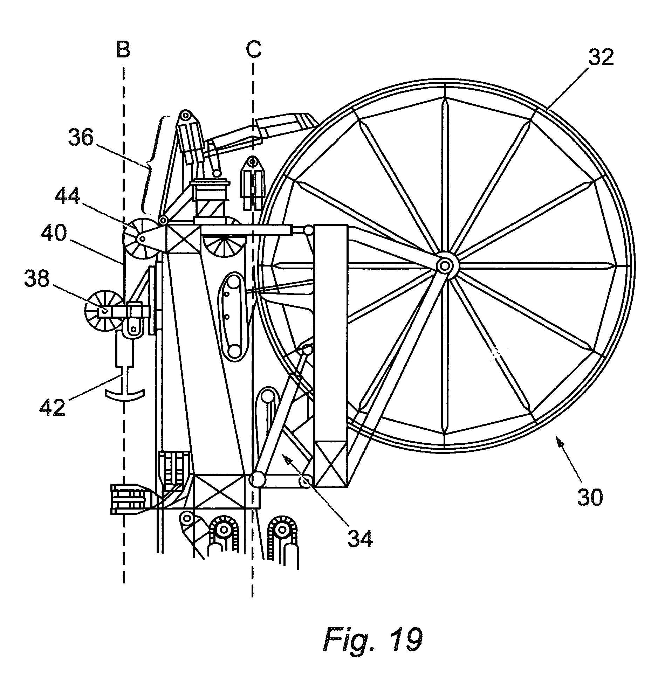

Figs. 4 and 19 show in more detail abandonment and recovery (A&R) apparatus which operates along the displaced axis through point B as mentioned above. In order to maintain the abandonment and recovery axis and the pipeline laying axis in a longitudinally spaced apart relationship, separating apparatus 30 (Fig. 19) is arranged to provide separate routes for each line. Aligner wheel 32 in conjunction with the straightener 34 causes the pipeline being reeled off the reels (not shown) to pass down toward the vessel firing line along the inclined pipeline laying axis C in a substantially known manner. Abandonment and recovery tackle 36 allows an abandonment and recovery cable 40 to pass along the axis B past an abandonment and recovery trolley 38. A hook 42 is provided on the lower end of the cable 40 whilst the upper end passes over A&R sheave 44 and returns to an A&R winch 41 on deck (see Fig. 4) More than one throw of winch cable and corresponding sheave / winch motor may be provided. The winch may be a drum winch or linear winch, for example.

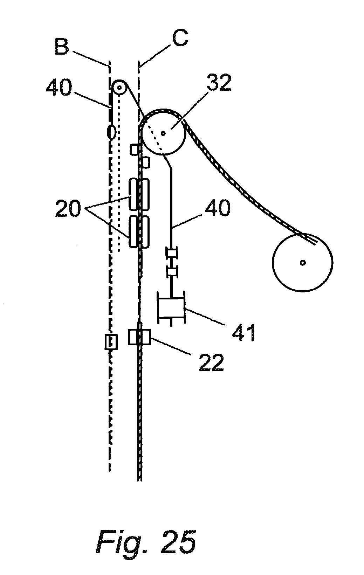

In use, and with particular reference to Figs. 1, 2 and 25, when a section of pipe is to be abandoned, the following procedure is adopted:
1) Reeling of the pipeline is stopped when the required length of pipeline has been deployed;
2) The hang off clamp 22 is activated in order to clamp the pipeline;
3) The pipeline is cut into a lower and upper section between the tensioners 20 and the hang off clamp 22 at the appropriate point;
4) The hang off clamp 22 and lower section of clamped pipeline is moved longitudinally from its initial forward position, in which it is aligned with the pipeline laying axis C, to a rearward position in which it is aligned with the abandonment and recovery axis B;
5) The abandonment and recovery cable 40 is connected to the top of the lower section of pipeline;
6) The hang off clamp 22 is released;
7) The pipeline may now be abandoned to the sea bed under control by reeling out the abandonment and recovery cable 40.

An advantage of the above described procedure is that the step of transferring loads between the tensioners 20, hang off clamp 22 and abandonment and recovery cable 40 can be performed very quickly. In this regard, while the pipeline is being laid along the inclined pipeline laying axis C, the abandonment and recovery system can be set up so that, when required, it can be very quickly connected to the top of the lower section of pipeline. Furthermore, an additional time saving can be made by preparing the next section of pipeline to be produced on the pipeline laying axis C whilst the previous section is being abandoned by the abandonment and recovery cable 40.

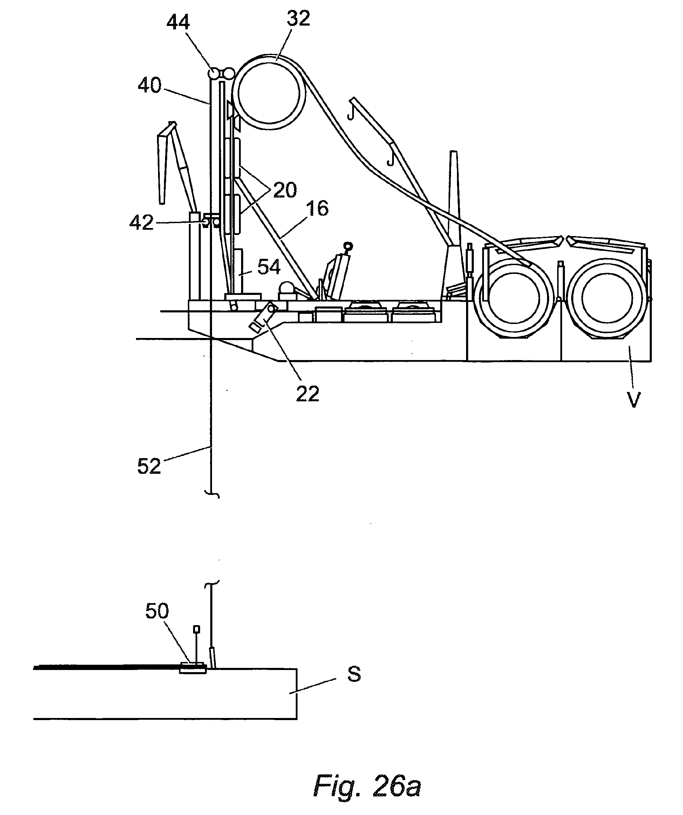

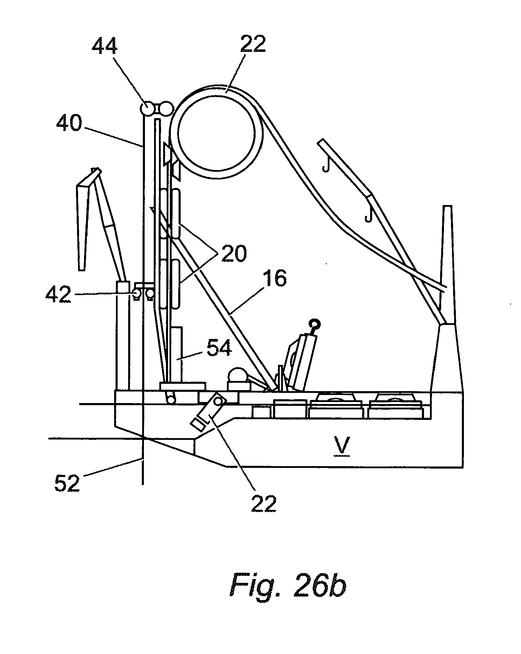

The additional advantage of being able to prepare the next section of pipeline during abandonment of the previous section will now be illustrated in more detail, with reference to Figs. 26 to 30.

It should be noted that the abandonment and recovery trolley sheave 38 allows the abandonment axis to be angled relative to the tower axis. In this case, the sheave 38 allows the winch cable 40 to roll thereover. The rotation and restriction provides by the sheave 38 along the length of the tower causes the winch cable 40 (if it is out of alignment with the tower axis below the sheave 38) to be diverted in line with the tower axis thereabove. This feature enables the simultaneous A&R and pipe laying operation described subsequently.

In the starting configuration of Fig. 26A, the first section of pipeline with second end PLET 50 has been laid on the sea bed S and the abandonment cable 52 is attached to the second end PLET 50. At this time, the second piece of pipeline to be laid is prepared on the vessel by connecting it, through the pipelaying tower, to a first end PLET 54.

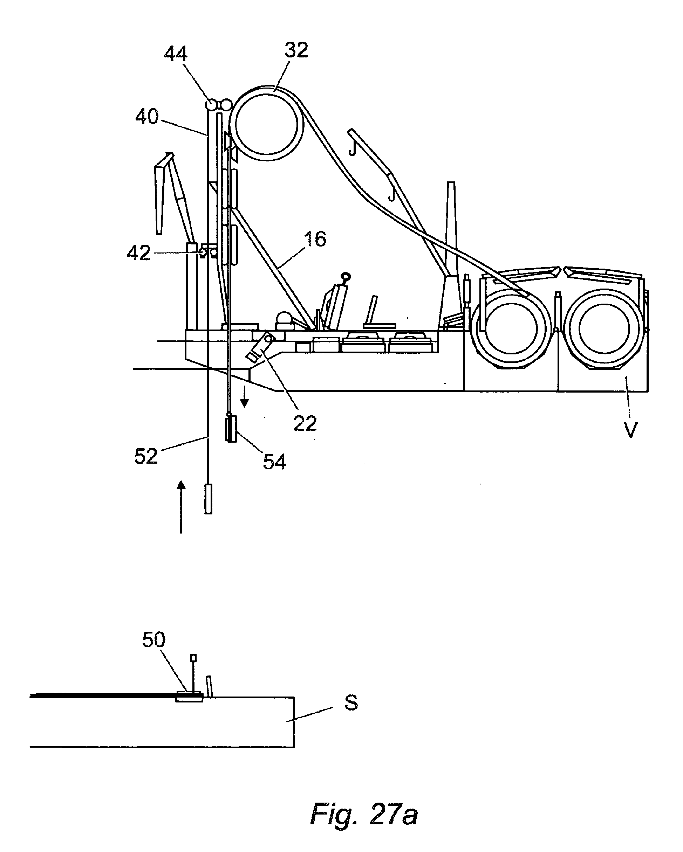

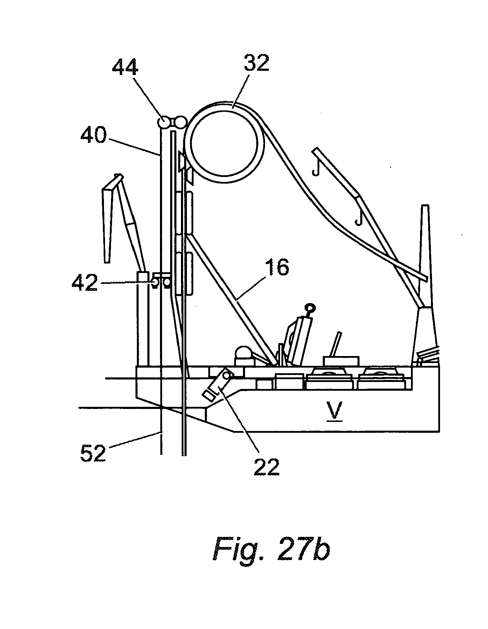

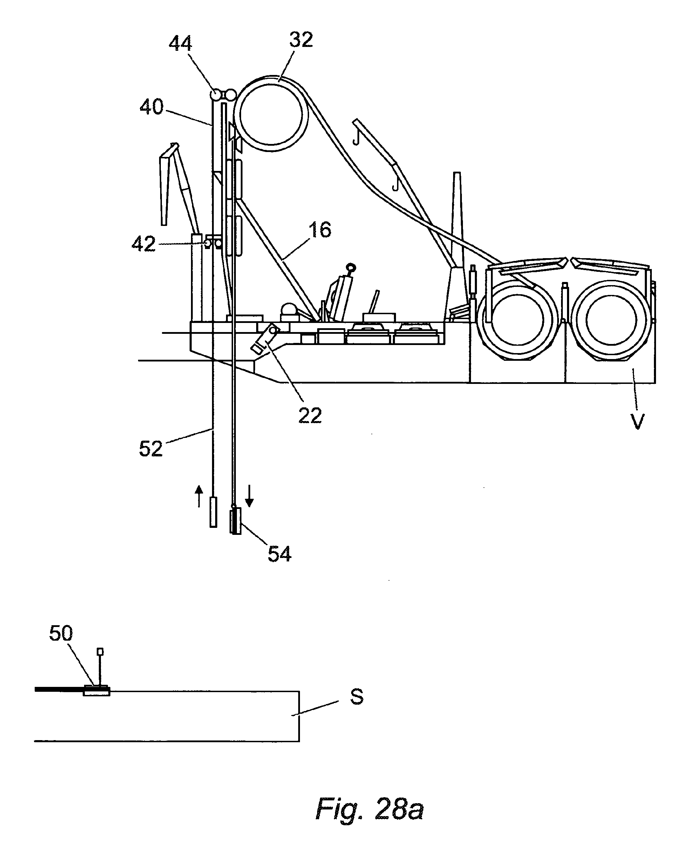

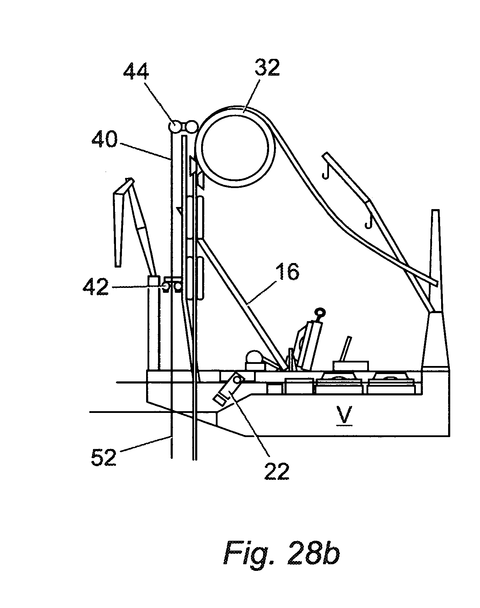

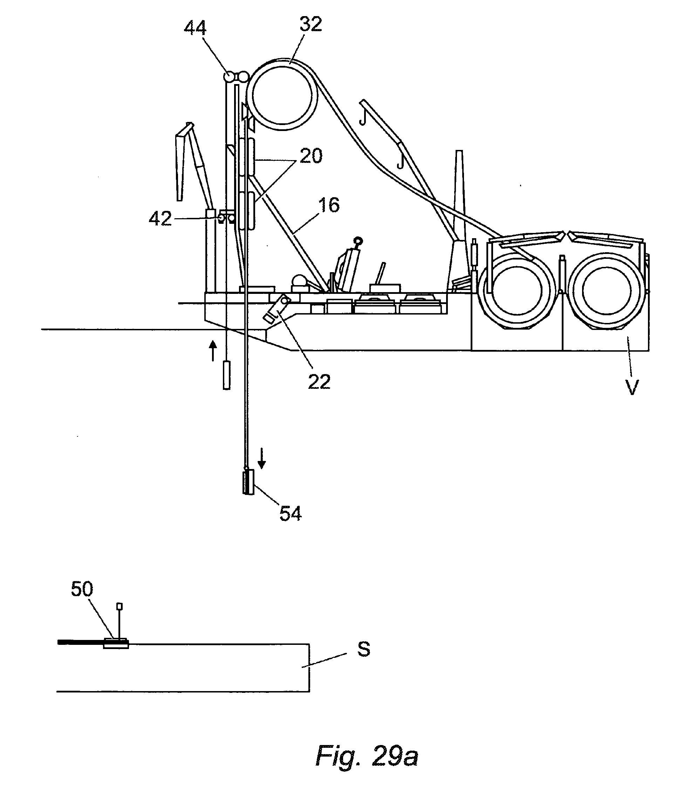

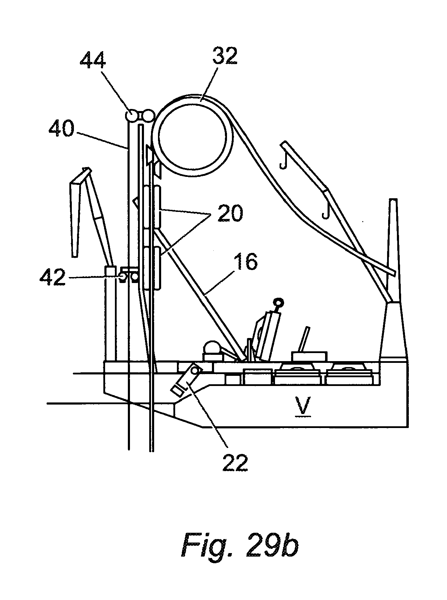

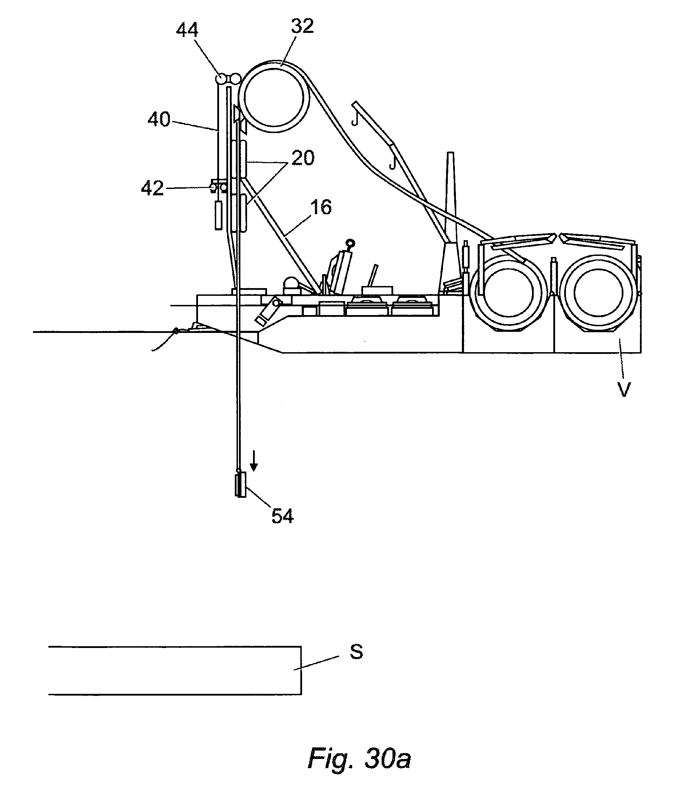

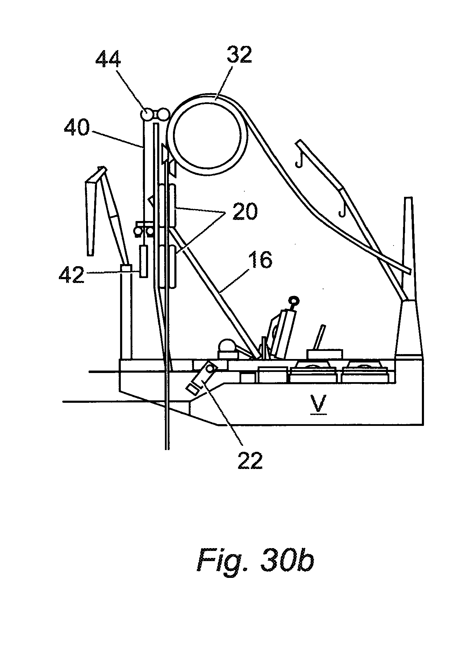

Referring to Fig. 27A, the abandonment cable 52 is now detached from the second end PLET 50 on the first laid pipeline and retrieved toward the vessel. At the same time, the second piece of pipeline to be laid is deployed from the vessel. In other words, as the abandonment cable 52 is being retrieved upwards toward the vessel, the second piece of pipeline and first end PLET 54 are being deployed downwards toward the sea bed S. This simultaneous retrieval and deployment is made possible by the longitudinal offset between the abandonment axis and the pipe laying axis, and continues while the lower end of the abandonment cable 52 and the first end PLET 54 of the second piece of pipeline pass one another (in Fig. 28A and Fig. 29A) and until the abandonment cable 52 has been fully retrieved (Fig. 30A). At this, point the first end PLET 54 of the second piece of pipeline is positioned a considerable depth below the vessel V and toward the sea bed S. This can reduce the overall time required to lay the second piece of pipeline by a number of hours.

Another advantage of the arrangement described is evident when bulky structures (not shown) such as Pipeline End Terminations (PLETs) or In Line Tees (ILTs) (collectively known as modules) are to be installed on the pipeline. Whilst the normal pipeline laying operation is being carried out, the bulky structure can be held on standby by the abandonment and recovery cable 40 along the abandonment and recovery axis B. When the bulky structure is to be installed on the pipeline, the following procedure is performed:-
1) Reeling of the pipeline is stopped;
2) The hang off clamp 22 is activated in order to clamp the pipeline;
3) The pipeline is cut into a lower and upper section between the tensioners 20 and the hang off clamp 22 at the appropriate point;
4) The hang off clamp 22 and lower section of clamped pipeline is moved longitudinally from its initial forward position, in which it is aligned with the pipeline laying axis C, to a rearward position in which it is aligned with the abandonment and recovery axis B and hence the bulky structure;
5) A piece of connecting pipeline provided at the bottom of the bulky structure is attached to the top of the lower section of pipeline;
6) The hang off clamp 22 is released;
7) The pipeline and bulky structure may now be lowered to below the deck of the vessel by reeling out the abandonment and recovery cable 40 (depending upon the catenary angle of the pipeline being laid, jacking of the tower to an overboard position (see Fig. 8) may also be required in order to allow the bulky structure to be lowered clear of the vessel transom).

In the case of an end module the pipeline can now be abandoned to the sea bed in a controlled manner by lowering of the abandonment and recovery cable 40. In the case of an ILT, the following further steps are taken:-
8) A piece of connecting pipeline at the top of the ILT, and hence the suspended pipeline, is clamped by the hang off clamp 22 on the underside of the vessel V;
9) The abandonment and recovery cable is disconnected from the top of the connecting piece of pipeline on the ILT;
10) The hang off clamp 22, suspended pipeline and ILT are moved longitudinally from the rearward position, in which they are aligned with the abandonment and recovery axis B, to the forward position in which they are aligned with the pipeline laying axis C;
11) The connecting pipeline provided at the top of the ILT is attached to the previously cut upper section of pipeline residing in the pipe laying tower;
12) The hang off clamp is released, and the pipeline laying process is re-initiated.

With reference to Figs. 9 to 18, throughout the pipeline laying operation, actuation arm 24 is used to adjust the angular position of the hang off clamp 22 relative to the deck of the vessel V. This can be used to allow the hang off clamp 22 angle to match that of the catenary angle of the pipeline being laid or, as shown in Fig. 18 and Fig. 11, when fully extended, is used to fully tilt the hang off clamp 22 until it lies in the same plane as the deck of the vessel in the storage area 26. As shown in Fig. 11, the storage area 26 has a length which allows the hang off clamp 22 to be moved longitudinally forward and out of the way of the firing line equipment. An example of when this may be useful is during periods of bad weather.

Modifications and improvements may be made to the foregoing without departing from the scope of the invention as defined by the claims.

## Claims

1. Apparatus for lowering an elongate article from a vessel, the apparatus comprising:-
a tower (10) mounted on the vessel (V) and including tensioning apparatus (20) for suspending an article being laid into the sea, the tower mounting defining a pivot axis permitting the tower (10) to be inclined at an angle away from vertical to match an inclined axis (C) of the article being laid;
a hang-off clamp (22); and
abandonment apparatus (30, 32, 34, 36, 38, 40, 41, 42, 44) for abandoning said elongate articles to the seabed after laying;
wherein the abandonment apparatus is mounted on the tower (10) and operable independently to suspend or lower articles along an abandonment axis (B) which is spaced from said inclined axis (C) while remaining in a vertical plane containing said inclined axis (C), and wherein the apparatus is capable of aligning the abandonment axis (B) and the hang off clamp (22) with one another while supporting the article.

2. Apparatus according to claim 1, wherein the abandonment apparatus is capable of operating substantially simultaneously with the tensioning apparatus (20) in order to permit abandonment or recovery of the article substantially simultaneously with a pipe laying operation.

3. Apparatus according to either of claims 1 and 2, wherein the hang off clamp (22) is selectively moveable along the centreline of the vessel (V) between a forward position, in which it is substantially aligned with the inclined axis (C), and a rearward position in which it is substantially aligned with the abandonment axis (B).

4. Apparatus according to claim 3, wherein the hang off clamp (22) is moveable on the vessel centreline along a sliding rail.

5. Apparatus according to any preceding claim, wherein the tower (10) of the vessel (V) is capable of tilting inboard in order to align the abandonment axis (B) and the hang off cramp (22) with one another.

6. Apparatus according to any preceding claim, wherein the tower (10) also comprises pipe laying apparatus including a straightener (34), and an aligner wheel (32) mounted toward the top of the pipeline laying tower (10).

7. Apparatus according to any preceding claim, wherein the abandonment apparatus further comprises, a winch cable (40) and sheave (44) associated with an abandonment winch (41), an abandonment trolley (38) capable of restraining the winch cable along the height of the tower, and an underwater hook (42).

8. Apparatus according to claim 7, wherein the abandonment trolley 48) is provided with a sheave (38) which, when the abandonment axis (B) is angled away from the tower angle, assists movement of the winch cable (40) and allows the winch cable to be diverted, above the sheave, in line with the tower axis.

9. Apparatus according to any preceding claim, wherein the hang off clamp (22) is tiltable in order to correspond with the inclined laying axis (C) and is further tiltable into a storage position in which its longitudinal axis is substantially aligned with the centreline of the vessel (V).

10. A method of lowering an elongate article from a vessel, the method comprising;-
providing a tower (10) mounted on the vessel (V), the tower including tensioning apparatus (20) for suspending an article being laid into the sea;
pivoting the tower (10) on a pivot axis at the tower mounting in order to incline the tower at an angle which is away from vertical and which matches an inclined axis (C) of the article being laid;
providing a hang-off clamp (22);
providing abandonment apparatus (30, 32, 34, 36, 38, 40, 41, 42, 44) mounted on the tower (10) for abandoning said elongate articles to the seabed after laying;
suspending and lowering, from the abandonment apparatus, articles along an abandonment axis (B) which is spaced from said inclined axis (C) while remaining in a vertical plane containing said inclined axis; and
selectively aligning the abandonment axis (B) and the hang off clamp (22) with one another while supporting the article.

11. A method according to claim 10, wherein the step of aligning the abandonment axis (B) and the hang off clamp (C) with one another is performed by tilting the tower inboard until the abandonment axis (B) is aligned with the hang off clamp (22).

12. A method according to claim 10, wherein the step of aligning the abandonment axis (B) and the hang off clamp (22) with one another is performed by moving the hang-off clamp (22) along the vessel (V) centreline until it is line with the abandonment axis (B).

13. A method according claim 12, wherein the step of aligning the abandonment axis (B) and the hang off clamp (22) is performed using a combination of tilting the tower (10) and moving the hang off clamp (22).

14. A method according to any of claims 10 to 13, further comprising cutting the pipeline being laid at an appropriate length and abandoning the pipeline to the sea bed.

15. A method according to claim 14, wherein the step of abandoning further comprises suspending the cut length of pipeline from the hang off clamp (22), moving the hang off clamp and suspended pipeline along the pipeline laying vessel centreline until it is substantially aligned with the abandonment axis (B), connecting the pipeline to the abandonment apparatus and lowering the pipeline toward the sea bed using the abandonment apparatus.

16. A method according to claim 15, wherein after abandonment of the pipeline being laid, the method further comprises retrieving the abandonment apparatus toward the vessel and, substantially simultaneously, preparing on the tower a second piece of pipeline to be laid.

17. A method according to claim 16, wherein the step of preparing the second piece of pipeline to be laid also includes the step of lowering, toward the sea bed, a first end of the second piece of pipeline to be laid.

18. A method according to any of claims 10 to 17, further comprising tilting the hang off clamp (22) relative to the deck of the pipeline laying vessel (V) in order to accommodate changes in the inclined axis.

19. A method according to claim 18, further comprising selectively tilting the hang off clamp (22) into a storage position in which its longitudinal axis is substantially aligned with the laying vessel centreline.

## Patentansprüche

1. Vorrichtung zum Absenken eines länglichen Artikels von einem Schiff, wobei die Vorrichtung Folgendes umfasst:
einen an dem Schiff (V) montierten Turm (10) mit einer Spannvorrichtung (20) zum Aufhängen eines Artikels, der im Meer verlegt werden soll, wobei die Turmhalterung eine Drehachse definiert, die es zulässt, den Turm (10) in einem Winkel von der Vertikalen weg passend zu einer geneigten Achse (C) des verlegten Artikels zu neigen;
eine Abhängklammer (22); und
eine Absetzvorrichtung (30, 32, 34, 36, 38, 40, 41, 42, 44) zum Absetzen der genannten länglichen Artikel auf dem Meeresboden nach dem Verlegen;
wobei die Absetzvorrichtung am Turm (10) montiert ist und unabhängig betätigt werden kann, um Artikel entlang einer Absetzachse (B) aufzuhängen oder abzusenken, die von der genannten geneigten Achse (C) beabstandet ist, während sie in einer die genannte geneigte Achse (C) einschließenden vertikalen Ebene bleibt, und wobei die Vorrichtung die Absetzachse (B) und die Abhängklammer (22) aufeinander ausrichten kann, während sie den Artikel trägt.

2. Vorrichtung nach Anspruch 1, wobei die Absetzvorrichtung im Wesentlichen gleichzeitig mit der Spannvorrichtung (20) arbeiten kann, damit der Artikel im Wesentlichen gleichzeitig mit einem Rohrverlegevorgang abgesetzt oder geborgen werden kann.

3. Vorrichtung nach Anspruch 1 oder 2, wobei die Abhängklammer (22) selektiv entlang der Mittellinie des Schiffs (V) zwischen einer vorderen Position, in der sie im Wesentlichen mit der geneigten Achse (C) fluchtet, und einer hinteren Position bewegt werden kann, in der sie im Wesentlichen mit der Absetzachse (B) fluchtet.

4. Vorrichtung nach Anspruch 3, wobei die Abhängklammer (22) auf der Schiffsmittellinie entlang einer Gleitschiene beweglich ist.

5. Vorrichtung nach einem der vorherigen Ansprüche, wobei der Turm (10) des Schiffs (V) innenbords geneigt werden kann, um die Absetzachse (B) und die Abhängklammer (22) aufeinander auszurichten.

6. Vorrichtung nach einem der vorherigen Ansprüche, wobei der Turm (10) auch eine Rohrverlegevorrichtung mit einem Richtmechanismus (34) und ein Ausrichtrad (32) umfasst, das in der Nähe der Oberseite des Pipelineverlegeturms (10) montiert ist.

7. Vorrichtung nach einem der vorherigen Ansprüche, wobei die Absetzvorrichtung ferner ein Windenseil (40) und eine Laufrolle (44) in Verbindung mit einer Absetzwinde (41), eine Absetzlaufkatze (38), die das Windenkabel entlang der Höhe des Turms halten kann, und einen Unterwasserhaken (42) umfasst.

8. Vorrichtung nach Anspruch 7, wobei die Absetzlaufkatze (48) mit einer Laufrolle (38) versehen ist, die, wenn die Absetzachse (B) vom Turmwinkel weg abgewinkelt ist, die Bewegung des Windenkabels (40) unterstützt und es zulässt, dass das Windenkabel oberhalb der Laufrolle in einer Linie mit der Turmachse abgelenkt wird.

9. Vorrichtung nach einem der vorherigen Ansprüche, wobei die Abhängklammer (22) geneigt werden kann, so dass sie der geneigten Verlegeachse (C) entspricht, und ferner in eine Verstauposition gekippt werden kann, in der ihre Längsachse im Wesentlichen mit der Mittellinie des Schiffs (V) fluchtet.

10. Verfahren zum Absenken eines länglichen Artikels von einem Schiff, wobei das Verfahren Folgendes beinhaltet:
Bereitstellen eines an dem Schiff (V) montierten Turms (10), wobei der Turm eine Spannvorrichtung (20) zum Aufhängen eines Artikels beinhaltet, der im Meer verlegt werden soll;
Schwenken des Turms (10) um eine Drehachse an der Turmhalterung, um den Turm in einen Winkel von der Vertikalen weg passend zu einer geneigten Achse (C) des verlegten Artikels zu neigen;
Bereitstellen einer Abhängklammer (22);
Bereitstellen einer Absetzvorrichtung (30, 32, 34, 36, 38, 40, 41, 42, 44), die an dem Turm (10) montiert ist, um die genannten geneigten Artikel nach dem Verlegen auf dem Meeresboden abzusetzen;
Aufhängen und Absenken, von der Absetzvorrichtung, von Artikeln entlang einer Absetzachse (B), die von der genannten geneigten Achse (C) beabstandet ist, während sie in einer die genannte geneigte Achse enthaltenden vertikalen Ebene bleibt; und
selektives Ausrichten der Absetzachse (B) und der Abhängklammer (22) aufeinander, während der Artikel getragen wird.

11. Verfahren nach Anspruch 10, wobei der Schritt des Ausrichtens der Absetzachse (B) und der Abhängklammer (C) aufeinander durch Kippen des Turms innenbords durchgeführt wird, bis die Absetzachse (B) mit der Abhängklammer (22) fluchtet.

12. Verfahren nach Anspruch 10, wobei der Schritt des Ausrichtens der Absetzachse (B) und der Abhängklammer (22) aufeinander durch Bewegen der Abhängklammer (22) entlang der Mittellinie des Schiffs (V) ausgeführt wird, bis sie mit der Absetzachse (B) in einer Linie ist.

13. Verfahren nach Anspruch 12, wobei der Schritt des Ausrichtens der Absetzachse (B) und der Abhängklammer (22) mit einer Kombination aus Kippen des Turms (10) und Bewegen der Abhängklammer (22) ausgeführt wird.

14. Verfahren nach einem der Ansprüche 10 bis 13, das ferner das Schneiden der verlegten Pipeline auf eine geeignete Länge und das Absetzen der Pipeline auf dem Meeresboden beinhaltet.

15. Verfahren nach Anspruch 14, wobei der Schritt des Absetzens ferner Folgendes beinhaltet: Aufhängen der abgeschnittenen Pipelinelänge von der Abhängklammer (22), Bewegen der Abhängklammer und der aufgehängten Pipeline entlang der Mittellinie des Pipelineverlegeschiffs, bis sie im Wesentlichen mit der Absetzachse (B) fluchtet, Verbinden der Pipeline mit der Absetzvorrichtung und Absenken der Pipeline auf den Meeresboden mit der Absetzvorrichtung.

16. Verfahren nach Anspruch 15, das nach dem Absetzen der verlegten Pipeline ferner das Bergen der Absetzvorrichtung auf das Schiff und im Wesentlichen gleichzeitig das Vorbereiten eines zweiten Stücks zu verlegender Pipeline am Turm beinhaltet.

17. Verfahren nach Anspruch 16, wobei der Schritt des Vorbereitens des zweiten zu verlegenden Pipeline-Stücks auch den Schritt des Absenkens eines ersten Endes des zweiten zu verlegenden Pipeline-Stücks auf den Meeresboden beinhaltet.

18. Verfahren nach einem der Ansprüche 10 bis 17, das ferner das Kippen der Abhängklammer (22) relativ zum Deck des Pipelineverlegeschiffs (V) beinhaltet, um Änderungen an der geneigten Achse aufzunehmen.

19. Verfahren nach Anspruch 18, das ferner das selektive Kippen der Abhängklammer (22) in eine Verstauposition beinhaltet, in der ihre Längsachse im Wesentlichen mit der Verlegeschiffmittellinie fluchtet.

## Revendications

1. Appareil pour abaisser un article allongé depuis un navire, cet appareil comprenant :-
une tour (10) montée sur le navire (V) et comprenant un appareil de tensionnement (20) pour suspendre un article en train d'être posé dans la mer, le support de montage de la tour définissant un axe de pivotement permettant à la tour (10) d'être inclinée à un angle écarté de la verticale pour correspondre à un axe incliné (C) de l'article en train d'être posé ;
une bride de mise en pendant (22) ; et
un appareil d'abandon (30, 32, 34, 36, 38, 40, 41, 42, 44) pour abandonner lesdits articles allongés sur le fond marin après la pose ;
dans lequel l'appareil d'abandon est monté sur la tour (10) et peut être utilisé indépendamment pour suspendre ou abaisser des articles le long d'un axe d'abandon (B) qui est écarté dudit axe incliné (C) tout en restant dans un plan vertical contenant ledit axe incliné (C), et dans lequel l'appareil est capable d'aligner l'axe d'abandon (B) et la bride de mise en pendant (22) l'un avec l'autre tout en supportant l'article.

2. Appareil selon la revendication 1, dans lequel l'appareil d'abandon est capable de fonctionner essentiellement simultanément avec l'appareil de tensionnement (20) afin de permettre l'abandon ou la récupération de l'article essentiellement simultanément avec une opération de pose de canalisations.

3. Appareil selon la revendication 1 ou la revendication 2, dans lequel la bride de mise en pendant (22) peut être déplacée sélectivement le long de la ligne d'axe du navire (V) entre une position en avant, dans laquelle elle est essentiellement alignée avec l'axe incliné (C), et une position en arrière, dans laquelle elle est essentiellement alignée avec l'axe d'abandon (B).

4. Appareil selon la revendication 3, dans lequel la bride de mise en pendant (22) peut être déplacée sur la ligne d'axe du navire le long d'un rail de coulissement.

5. Appareil selon l'une quelconque des revendications précédentes, dans lequel la tour (10) du navire (V) est capable de s'incliner vers l'intérieur du navire afin d'aligner l'axe d'abandon (B) et la bride de mise en pendant (22) l'un avec l'autre.

6. Appareil selon l'une quelconque des revendications précédentes, dans lequel la tour (10) comprend aussi un appareil de pose de canalisations comprenant un redresseur (34), et une roue d'alignement (32) montée vers le haut de la tour de pose de pipelines (10).

7. Appareil selon l'une quelconque des revendications précédentes, dans lequel l'appareil d'abandon comprend en outre un câble de treuil (40) et un réa (44) associés à un treuil d'abandon (41), un trolley d'abandon (38) capable de restreindre le câble du treuil le long de la hauteur de la tour, et un crochet immergé (42).

8. Appareil selon la revendication 7, dans lequel le trolley d'abandon (48) est pourvu d'un réa (38) qui, lorsque l'axe d'abandon (B) est écarté de l'angle de la tour, aide le déplacement du câble du treuil (40) et permet au câble du treuil d'être dévié, au-dessus du réa, en ligne avec l'axe de la tour.

9. Appareil selon l'une quelconque des revendications précédentes, dans lequel la bride de mise en pendant (22) est inclinable afin de correspondre à l'axe de pose incliné (C) et est inclinable en outre dans une position de rangement dans laquelle son axe longitudinal est essentiellement aligné avec la ligne d'axe du navire (V).

10. Procédé pour abaisser un article allongé depuis un navire, ce procédé comprenant :-
la prévision d'une tour (10) montée sur le navire (V), cette tour comprenant un appareil de tensionnement (20) pour suspendre un article étant en train d'être posé dans la mer ;
le pivotement de la tour (10) sur un axe de pivotement au niveau du support de montage de la tour afin d'incliner la tour à un angle qui est écarté de la verticale et qui correspond à un axe incliné (C) de l'article en train d'être posé ;
la prévision d'une bride de mise en pendant (22) ;
la prévision d'un appareil d'abandon (30, 32, 34, 36, 38, 40, 41, 42, 44) monté sur la tour (10) pour abandonner lesdits articles allongés sur le fond marin après la pose ;
la suspension et l'abaissement, depuis l'appareil d'abandon, d'articles le long d'un axe d'abandon (B) qui est écarté dudit axe incliné (C) tout en restant dans un plan vertical contenant ledit axe incliné ; et
l'alignement sélectif de l'axe d'abandon (B) et de la bride de mise en pendant (22) l'un avec l'autre tout en supportant l'article.

11. Procédé selon la revendication 10, dans lequel l'étape d'alignement de l'axe d'abandon (B) et de la bride de mise en pendant (C) l'un avec l'autre est effectuée en inclinant la tour vers l'intérieur du navire jusqu'à ce que l'axe d'abandon (B) soit aligné avec la bride de mise en pendant (22)

12. Procédé selon la revendication 10, dans lequel l'étape d'alignement de l'axe d'abandon (B) et de la bride de mise en pendant (22) l'un avec l'autre est effectuée en déplaçant la bride de mise en pendant (22) le long de la ligne d'axe du navire (V) jusqu'à ce qu'elle soit en ligne avec l'axe d'abandon (B).

13. Procédé selon la revendication 12, dans lequel l'étape d'alignement de l'axe d'abandon (B) et de la bride de mise en pendant (22) est effectuée en utilisant une combinaison de l'inclinaison de la tour (10) et du déplacement de la bride de mise en pendant (22).

14. Procédé selon l'une quelconque des revendications 10 à 13, comprenant en outre la coupe du pipeline en train d'être posé à une longueur appropriée et l'abandon du pipeline sur le fond marin.

15. Procédé selon la revendication 14, dans lequel l'étape d'abandon comprend en outre la suspension de la longueur coupée de pipeline depuis la bride de mise en pendant (22), le déplacement de la bride de mise en pendant et du pipeline suspendu le long de la ligne d'axe du navire de pose de pipelines jusqu'à ce qu'elle soit essentiellement alignée avec l'axe d'abandon (B), le raccordement du pipeline à l'appareil d'abandon et l'abaissement du pipeline vers le fond marin en utilisant l'appareil d'abandon.

16. Procédé selon la revendication 15, dans lequel, après l'abandon du pipeline en train d'être posé, ce procédé comprend en outre la récupération de l'appareil d'abandon vers le navire et, essentiellement simultanément, la préparation sur la tour d'un deuxième morceau de pipeline à poser.

17. Procédé selon la revendication 16, dans lequel l'étape de préparation du deuxième morceau de pipeline à poser comprend aussi l'étape d'abaissement, vers le fond marin, d'une première extrémité du deuxième morceau de pipeline à poser.

18. Procédé selon l'une quelconque des revendications 10 à 17, comprenant en outre l'inclinaison de la bride de mise en pendant (22) par rapport au pont du navire de pose de pipelines (V) afin de l'adapter aux changements de l'axe incliné.

19. Procédé selon la revendication 18, comprenant en outre l'inclinaison sélective de la bride de mise en pendant (22) dans une position de rangement dans laquelle son axe longitudinal est essentiellement aligné avec la ligne d'axe du navire de pose.
